# EUROPEAN PATENT SPECIFICATION

(11) **EP 3 620 811 B1**
(45) Date of publication and mention of the grant of the patent: **22.06.2022**
(21) Application number: 18193143.7
(22) Date of filing: 07.09.2018
(51) Int. Cl.: G01S 7/41, G01S 13/60, G01S 13/88, G01S 13/89, G01S 13/93

(54) **METHOD FOR DETERMINING THE POSITION OF A VEHICLE**
VERFAHREN ZUR BESTIMMUNG DER POSITION EINES FAHRZEUGS
PROCÉDÉ POUR DÉTERMINER LA POSITION D'UN VÉHICULE

(43) Date of publication of application: 11.03.2020
(73) Proprietor: Aptiv Technologies Limited, St. Michael (BB)
(72) Inventor: Westerhoff, Jens, 44225 Dortmund (DE); Dörr, Wolfgang, 51674 Wiehl (DE)
(74) Representative: Manitz Finsterwald Patent- und Rechtsanwaltspartnerschaft mbB

(56) References cited:
- US-A1- 2016 139 255
- US-A1- 2018 149 739

## Description

The invention relates to a method for determining the position of a vehicle equipped with a control and processing unit for carrying out the method and a radar system, wherein the radar system includes at least one radar sensor adapted to receive radar signals emitted from at least one radar emitter of the radar system and reflected from an object in a vicinity of the vehicle towards the radar sensor, wherein the method comprises:
(i) successively acquiring radar scans respectively comprising a plurality of radar detection points, wherein each radar detection point is evaluated from a radar signal received at the radar sensor and representing a location in the vicinity of the vehicle,
(ii) determining, from a database, a predefined navigation map comprising at least one element representing a static landmark in the vicinity of the vehicle,
(iii) matching at least a subset of the plurality of radar detection points of a radar scan and the at least one element of the navigation map, and
(iv) determining the position of the vehicle based on the matching.

The self-localization or ego-localization of a vehicle with respect to a predefined map such as a navigation map is an important task in the field of autonomous driving and similar applications. On-board radar systems are able to detect objects like buildings, trees, poles and other vehicles - even under bad weather conditions.

The radar detections acquired by a radar system can be used to localize the vehicle within the navigation map. The navigation map can be gathered from a publicly available database. For example, it can be a so called "open-street map". Alternatively, the navigation map can be provided by a commercial map provider. Such maps usually are particularly accurate. Generally, the navigation map can be derived from a global database on the basis of a given position of the vehicle, e.g. from a global position system of the vehicle.

The static landmarks can be known static objects, i. e. infrastructural objects or persistent objects, like walls of buildings, barriers, fences, pavement edges, poles, bigger plants, trees and the like. The map data stored in the database comprise simplified mathematical representations of the landmarks, for example in the form of extended geometrical objects like lines. Each of the elements comprises information about its position in a world coordinate system.

The term "matching" in step (iii) can be understood in the sense of evaluating a correspondence between the radar detection points and the elements of the map. To carry out the matching, a so called Scan Matching algorithm can be applied. An example of a Scan Matching algorithm is disclosed in EP 3 517 996 A1. In the context of Scan Matching, the correspondence between the radar detection points and the elements of the map is exploited for the determination of the position of the vehicle.

Although the methods described herein use a radar system of a vehicle, it is understood that the methods may also be adopted using detection points of a lidar system instead of a radar system. Combinations of radar and lidar detection points may also be possible.

Scan Matching algorithms suffer from the problem that in real traffic spaces there are objects which are detectable by radar sensors, but are not recorded in the navigation map. Examples for such objects are parked vehicles. In particular in urban environments, such objects occur quite frequently. The Scan Matching algorithm may confuse the radar reflections from such objects with the elements of the navigation map. In such a case, the self-localization process usually fails. In particular, vehicles parked parallel to the road course line up similar to elongated infrastructural objects. This is problematic for the important lateral self-localization of a vehicle.

US 2016/0139255 A1 discloses a method for localizing a vehicle from a stationary reference map, wherein a current environment map showing objects in the vicinity of the vehicle is compared to the reference map and certain classes of objects are disregarded during the comparison.

US 2018/0149739 A1 discloses a method for determining the position of a vehicle by means of a radar sensor, wherein the radar data are compared to a digital map. During the creation of the digital map, angular information is additionally incorporated into the map.

It is an object of the invention to provide an improved method for determining the position of a vehicle, in particular a method which has an enhanced robustness and which is suitable for urban environments.

The object is satisfied by a method in accordance with claim 1.

According to the invention, radar detection points of successive scans are collected over a time period and a feature map of the vicinity of the vehicle is created, wherein the feature map comprises a plurality of detection features of the collected radar detection points, wherein a classifier is applied to the feature map to determine temporarily occupied regions which are, with a predefined probability, occupied by temporarily present objects not recorded in the navigation map, and wherein in step (iii), radar detection points which are located in a temporarily occupied region are considered to a lesser extent than radar detection points which are not located in a temporarily occupied region.

In other words, the radar detection points are accumulated over time and - parallel to the matching process - used to establish a local map containing information related to the presence of objects which are not recorded in the navigation map. This provides an additional semantic weighting of radar detection points. The additional information contained in the feature map is considered in the matching process. Thus, ambiguities between the radar measurements and the navigation map are avoided. The Scan Matching process is stable even if a plurality of parked vehicles is present in the vicinity of the vehicle. The invention therefore enables a particularly robust self-localization of vehicles within any kind of environment and in particular in urban environments.

To improve the reliability of the classification, the feature map has 4-20 feature layers which are derived from the detection features.

The determined detection features include the number and the signal amplitude of radar detection points collected over the time period. Such detection features can be respectively determined for a specific location, e. g. for a cell of a grid-like structure.

The determined detection features include features derived from height information and/or polarization information. Radar systems often provide such additional information, which may be used to further enhance the robustness of the localization process.

Advantageous embodiments of the invention are specified in the dependent claims, in the description and in the appended drawings.

Preferably, the radar detection points of successive scans are continuously collected and the feature map is regularly updated. This can be done simultaneously to the matching process. The result of the classification is more reliable if any available measurements are exploited.

In order to consider radar detection points which are located in a temporarily occupied region to a lesser extent than radar detection points which are not located in a temporarily occupied region, radar detection points which are located in a temporarily occupied region can simply be excluded from the matching.

Alternatively, a weighted matching can be performed, wherein the weights of radar detection points which are located in a temporarily occupied region are reduced with respect to the weights of radar detection points which are not located in a temporarily occupied region. In particular, the weights can be selected according to the probability with which the respective region is a temporarily occupied region. This enables a particularly reliable Scan Matching process.

According to an embodiment of the invention, the feature map comprises a grid-like structure comprising a two-dimensional or multi-dimensional arrangement of cells and the detection features are assigned to the cells. Thus, the detection features are localized via the cell positions. The cell pattern can be easily handled as an array by a computer program. The cell size preferably ranges from 1cm × 1cm to 50cm × 50cm. It is preferred that for each cell, at least two features and more preferably 4-20 features are determined. Preferably, the cells are non-overlapping. It is preferable that the feature map is created in fixed world coordinates. To achieve this, the coordinates of the radar detection points, typically given in a vehicle coordinate system, can be transformed to coordinates of a world coordinate system. If the feature map is created in fixed world coordinates, it can easily be related to the navigation map in order to define the temporarily occupied regions within the navigation map. In principle, the feature map can be created in any appropriate coordinate system, dependent on the respective application.

According to a further embodiment of the invention, the classifier is a grid-based classifier. Grey scales or colours can represent values related to the detection features. In particular, the feature map can be created in the form of a multi-dimensional feature map.

Preferably, the classifier is a trainable classifier. In particular, the classifier can be trained off-line, for example by means of a set of training maps having marked occupied areas.

The classifier can comprise a Deep Neural Network and/or a Support Vector Machine. Such classifiers are specifically flexible and efficient. However, other types of classifiers may be used as well.

According to another embodiment of the invention, regions of the feature map are classified into one of at least two predefined classes by means of the classifier, wherein the at least two predefined classes include a temporary object class and a non-temporary object class. The temporary object class can be a parked vehicle class which represents areas that are occupied by parked vehicles. The non-temporary object class can represent areas which are permanently occupied. According to a specific embodiment of the invention, cells of a grid-like feature map or of the navigation map are respectively classified either into a temporary object class or into a non-temporary object class.

The classifier can estimate a class probability for a region, wherein the region can be classified as a temporarily occupied region if the class probability exceeds a threshold.

According to another embodiment of the invention, occupancy probabilities and/or free space probabilities for individual regions of the feature map are determined based on the detection features. In particular, the feature map can be created in the form of an "occupancy map" or a "free space map".

The invention also relates to a vehicle equipped with a radar system, wherein the radar system includes at least one radar sensor adapted to receive radar signals emitted from at least one radar emitter of the radar system and reflected in a vicinity of the vehicle towards the radar sensor, and a control and processing unit connected to the radar sensor, wherein the control and processing unit is configured to carry out a method as specified in the present disclosure.

The control and processing unit may comprise a storage device in which instructions implementing embodiments of the described methods are stored. Preferably, the method can be carried out without a mobile connection to a central server or the like. Therefore, the storage device can also comprise a database including data for determining a navigation map representing the vicinity of the vehicle. However, as the skilled person understands, use of a mobile connection can be made for updating or incorporating data while carrying out the method.

The invention is described further in the following by means of exemplary embodiments shown in the drawings in which
- Fig. 1: is an arrangement of schematic illustrations of a vehicle, a plurality of radar detection points and elements of a navigation map in a vehicle coordinate system;
- Fig. 2: shows a vehicle in an environment, wherein the environment comprises parked vehicles and a building;
- Fig. 3: shows a feature map created in the context of a method according to the invention along with a host vehicle;
- Fig. 4: shows the arrangement according to Fig. 2, wherein temporarily occupied regions determined in the context of a method according to the invention are marked; and
- Fig. 5: is a schematic overview illustrating a method according to the invention for determining the position of a vehicle.

In the figures, the same or corresponding elements are indicated with the same reference signs.

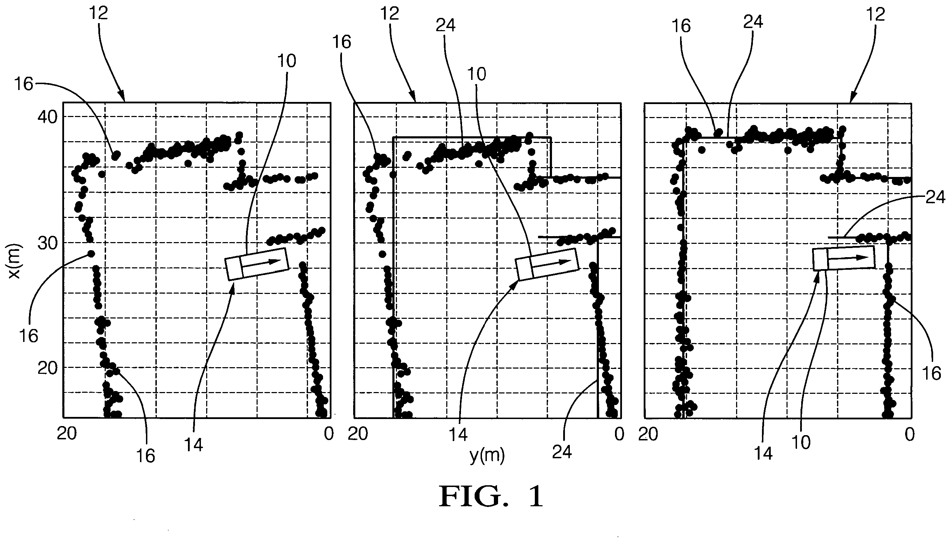

Fig. 1 provides a basic illustration of a so called Scan Matching procedure used for the self-localization of a vehicle 10. In the three parts of Fig. 1, the vehicle 10 is respectively shown in a Cartesian world coordinate system 12 having axes *x* and y. The vehicle 10 has a radar system 14 comprising a total of four pairs of radar sensors and radar emitters, which are positioned in each of the corners of the vehicle 10. Therefore, the radar system 14 is configured to monitor an angle range of 360 degrees around the vicinity of the vehicle 10. It is understood that the vehicle 10 can have a different number of radar sensors and emitters which also can be positioned in a different configuration than shown in Fig. 1. The radar system 14 comprises an electronic control and processing unit connected to the pairs of radar sensors and radar emitters. The electronic control and processing unit is not shown in Fig. 1.

The radar system is configured to successively perform radar scans in a known manner for acquiring radar detection points 16, i.e. positions of surface spots of objects present in the vicinity of the vehicle 10.

In the left part of Fig. 1, exemplary radar detection points 16 are shown. In the central part of Fig. 1, elements 24 representing static landmarks in the vicinity of the vehicle 10 are shown in addition to the radar detection points 16. In particular, the elements 24 can represent walls of buildings or groups of walls. It is understood that the elements 24 may form a predefined navigation map with regard to the vehicle 10 and that the elements 24 are computer-implemented representations of real static landmarks. The elements 24 can be gathered from a database by the control and processing unit of the radar system.

According to the central part of Fig. 1, the elements 24 show a geometrical correspondence with the arrangement of the detection points 16. However, there is an angular displacement between the elements 24 and the detection points 16. This displacement can be compensated by a Scan Matching procedure. Such a procedure comprises finding a transformation function which can be used to correct the inaccurate position, for example a rigid transformation function including a translation and a rotation. In particular, a matching as disclosed in the European patent application number 18153439.7 can be carried out. A corresponding result is illustrated in the right part of Fig. 1, in which the inaccurate position of the vehicle 10 from the central part of Fig. 1 has been corrected. While the left part of Fig. 1 shows the detection points 16 without the navigation map, both the central part and the right part of Fig. 1 show overlays of detection points 16 and the navigation map. In the right part of Fig. 1, the detection points 16 have been matched and the position of the vehicle 10 has been corrected correspondingly. The corrected position of the vehicle 10 within the world coordinate system 12 can be used for different applications such as autonomous driving. The determining of the position of the vehicle 10 within the navigation map is called self-localization or ego-localization.

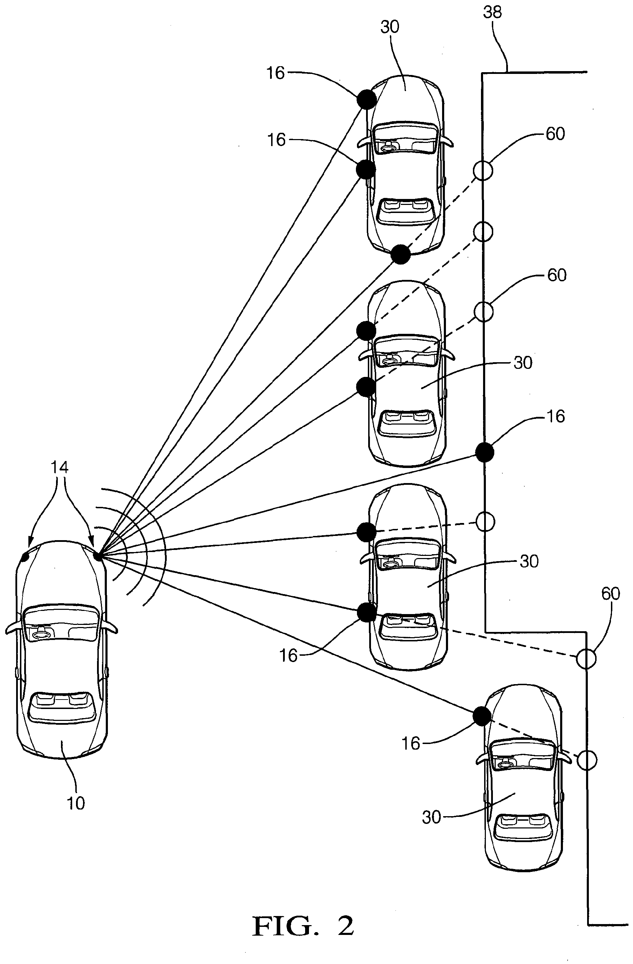

Fig. 2 shows the vehicle 10 in an urban environment where parked vehicles 30 are present. The parked vehicles 30 are detected by the radar system 14 (Fig. 1), i.e. radar detection points 16 originating from the parked vehicles 30 are created. The parked vehicles 30 are temporarily present objects and therefore not recorded in the navigation map. However, since the parked vehicles 30 line up near the wall of a building 38, which is recorded in the navigation map, the radar system 14 may confuse the parked vehicles 30 with the building 38. As a consequence of the contradicting map information, the self-localization of the vehicle 10 is likely to fail.

In order to avoid such a failure, the control and processing unit of the radar system 14 is configured to carry out an improved method for determining the position of the vehicle 10, as is described below.

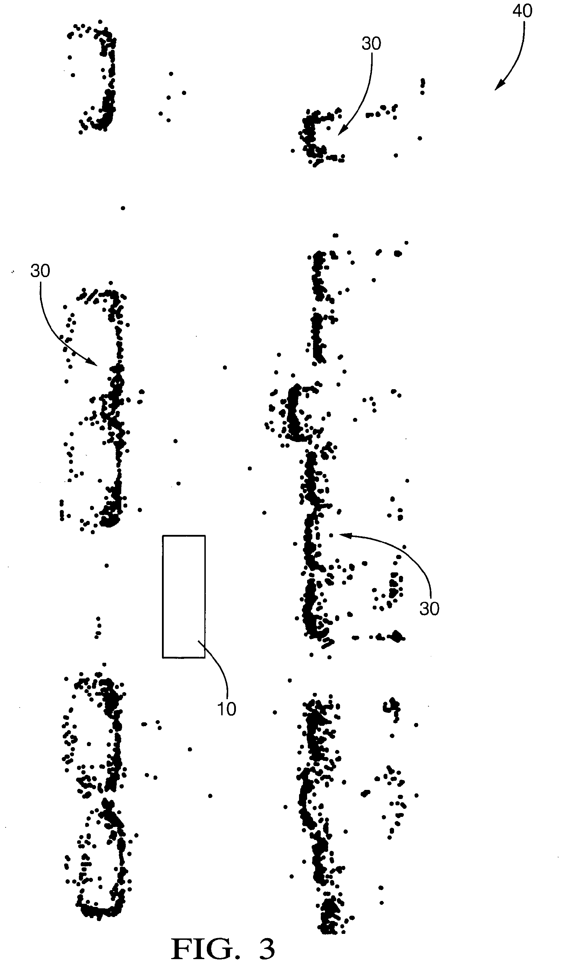

According to an embodiment of the invention, the radar detection points 16 are not only used for the Scan Matching process, but also for a discrimination between buildings 38 or other infrastructural elements, on the one hand, and parked vehicles 30 or other temporary objects, on the other hand. In particular, radar detection points 16 of successive radar scans are collected over a time period. Local detection features of the collected radar detection points 16 are used to create a feature map 40 as shown in Fig. 3. In particular, the number and the signal amplitude of radar detection points 16 collected over the time period for a specific spot or region are determined and handled as detection features. Additionally, height information and/or polarization information are determined as detection features.

In the context of the present disclosure, a detection feature is a property of a point or a region which provides local information about the type and/or the statistics of radar detections. The detection features are determined in relation to the coordinates of the corresponding radar detection points 16. Preferably, a grid map comprising a regular two-dimensional arrangement of cells is created. The detection features are assigned to the cells of the grid map. Thus, a feature map 40 is created, preferably in fixed world coordinates.

The exemplary feature map 40 according to Fig. 3 is an "occupancy map", i. e. the grey values correlate with the occupancy probabilities for the individual cells. Alternatively, the feature map can be a "free space map". It has to be noted that the feature map 40 can be colour-coded. Also, the feature map 40 has 4-20 feature layers, for example 5-10 feature layers.

In the feature map 40, regions occupied by parked vehicles 30 are clearly discernible. In accordance with an embodiment of the invention, a classifier is applied to the feature map 40 to determine regions which are likely to be occupied by parked vehicles 30 or the like. Preferably, a trainable grid-based classifier comprising a Deep Neural Network and/or a Support Vector Machine is used. The classifier is preferably trained off-line, for example by means of a set of training maps having manually marked regions that are occupied by parked vehicles or the like.

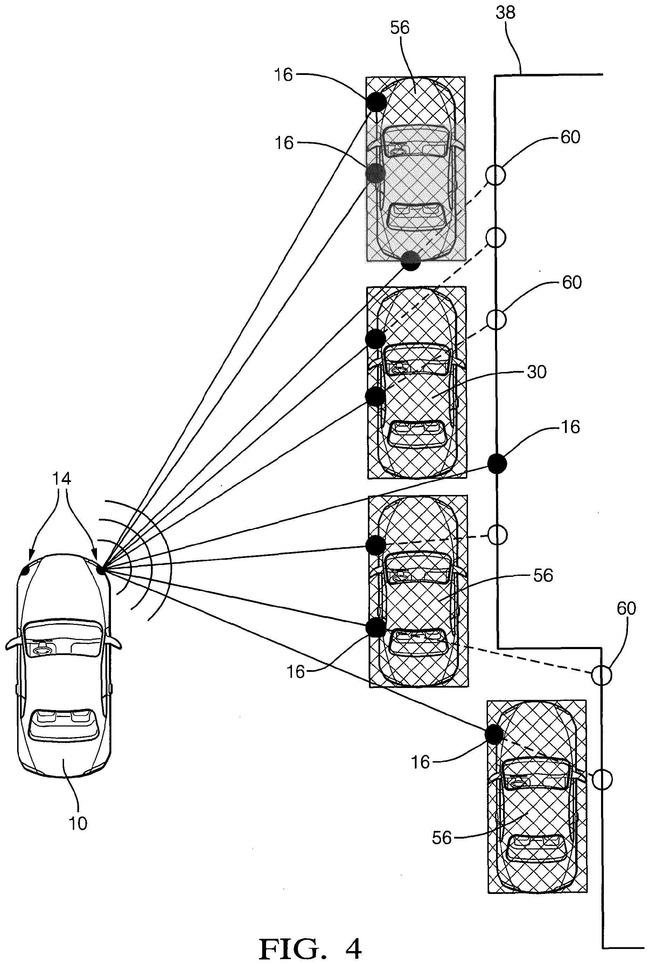

Based on the classification result, those regions having a predefined probability of being occupied by parked vehicles 30 or the like, for example a probability of 90%, are defined as temporarily occupied regions 56 as shown in Fig. 4. In the Scan Matching process (Fig. 1), radar detection points 16 which are located in a temporarily occupied region 56 (Fig. 4) are considered to a lesser extent than radar detection points 16 which are not located in a temporarily occupied region 56.

According to an embodiment of the invention, radar detection points 16 which are located in a temporarily occupied region 56 are excluded from the matching. According to another embodiment of the invention, a weighted matching is performed and the weights of radar detection points 16 which are located in a temporarily occupied region 56 are reduced with respect to the weights of radar detection points 16 which are not located in a temporarily occupied region 56. According to a specific embodiment of the invention, each weight is determined according to the probability of the respective spot being located in a temporarily occupied region 56.

The matching and the classification are carried out in parallel. Preferably, the radar detection points 16 of successive radar scans are continuously collected and the feature map 40 is regularly updated.

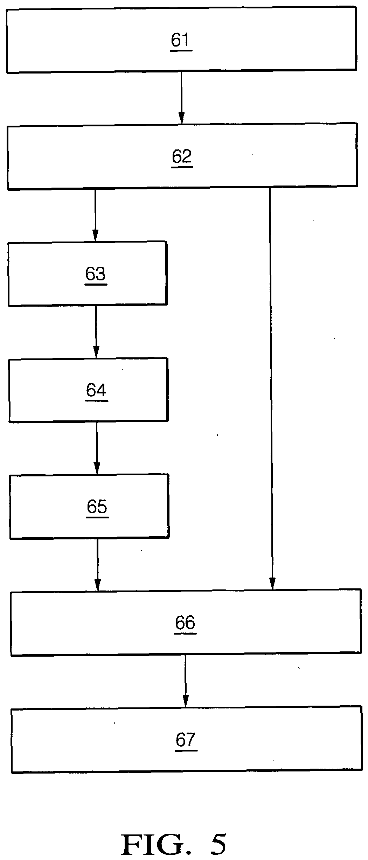

Fig. 5 shows a flowchart illustrating a method for determining the position of the vehicle 10 (Fig. 1) in accordance with an embodiment of the invention. In a step 61, a classifier based on a Deep Neural Network or a Support Vector Machine is trained to discriminate between temporarily occupied regions 56, free space regions and/or permanently occupied regions based on feature map 40. For the training, the classifier is applied to a set of feature maps 40 having manually marked regions. In a step 62, radar scans respectively comprising a plurality of radar detection points 16 are successively acquired. A feature map 40 (Fig. 3) of the vicinity of the vehicle 10 is created or updated in a step 63. In a subsequent step 64, the trained classifier is applied to the feature map 40. Based on the classification result, temporarily occupied regions 56 (Fig. 4) which are likely to be occupied by parked vehicles 30 are determined in a step 65. A Scan Matching process using the radar detection points 16 and elements 24 (Fig. 1) of a navigation map is carried out in a step 66. Radar detection points 16 which are located in a temporarily occupied region 56 are excluded from the matching or at least considered to a lesser extent than radar detection points 16 which are not located in a temporarily occupied region 56. Based on the matching of step 66, the position of the vehicle 10 is determined in a step 67.

Radar sensors are able to perceive objects like buildings 38 (Fig. 2) despite the line of sight is occluded by parked vehicles 30. This ability is given by the radar reflections on the ground surface below the parked vehicle 30. Based on such ground reflections, additional radar detection points 60 are collected. Due to the classification according to an embodiment of the invention, such additional radar detection points 60 can be used as well to make the Scan Matching process even more robust.

Therefore, the invention increases the robustness, availability and quality of ego-vehicle localization, in particular within urban environments.

### Reference numerals

- 10: vehicle
- 12: world coordinate system
- 14: radar system
- 16: detection point
- 24: element of navigation map
- 30: parked vehicle
- 38: building
- 40: feature map
- 56: temporarily occupied region
- 60: ground reflection detection point
- 61-67: method steps

## Claims

1. A method for determining the position of a vehicle (10) equipped with a control and processing unit for carrying out the method and a radar system (14), wherein the radar system includes at least one radar sensor adapted to receive radar signals emitted from at least one radar emitter of the radar system and reflected from an object in a vicinity of the vehicle (10) towards the radar sensor,
wherein the method comprises:
(i) successively acquiring (62) radar scans respectively comprising a plurality of radar detection points (16, 60), wherein each radar detection point (16, 60) is evaluated from a radar signal received at the radar sensor and representing a location in the vicinity of the vehicle (10),
(ii) determining, from a database, a predefined navigation map comprising at least one element (24) representing a static landmark in the vicinity of the vehicle (10),
(iii) matching (66) at least a subset of the plurality of radar detection points (16, 60) of a radar scan and the at least one element (24) of the navigation map, and
(iv) determining (67) the position of the vehicle (10) based on the matching,
wherein radar detection points (16, 60) of successive scans are collected over a time period and a feature map (40) of the vicinity of the vehicle (10) is created (63), wherein the feature map (40) comprises a plurality of detection features of the collected radar detection points (16, 60),
wherein a classifier is applied to the feature map (40) to determine temporarily occupied regions (56) which are, with a predefined probability, occupied by temporarily present objects (30) not recorded in the navigation map, and
wherein in step (iii), radar detection points (16, 60) which are located in a temporarily occupied region (56) are considered to a lesser extent than radar detection points (16, 60) which are not located in a temporarily occupied region (56),
wherein the feature map (40) has 4-20 feature layers which are derived from the detection features,
wherein the determined detection features include the number and the signal amplitude of radar detection points (16, 60) collected over the time period and
wherein the determined detection features include features derived from height information and/or polarization information.

2. The method according to claim 1,
wherein the radar detection points (16, 60) of successive scans are continuously collected and the feature map (40) is regularly updated.

3. The method according to claim 1 or 2,
wherein in step (iii), radar detection points (16, 60) which are located in a temporarily occupied region (56) are excluded from the matching.

4. The method according to claim 1 or 2,
wherein in step (iii), a weighted matching is performed and the weights of radar detection points (16, 60) which are located in a temporarily occupied region (56) are reduced with respect to the weights of radar detection points (16, 60) which are not located in a temporarily occupied region (56).

5. The method according to at least one of the preceding claims,
wherein the feature map (40) comprises a grid-like structure comprising a two-dimensional or multi-dimensional arrangement of cells and the detection features are assigned to the cells.

6. The method according to at least one of the preceding claims,
wherein the classifier is a grid-based classifier.

7. The method according to at least one of the preceding claims,
wherein the classifier is a trainable classifier.

8. The method according to claim 7,
wherein the classifier comprises a Deep Neural Network and/or a Support Vector Machine.

9. The method according to at least one of the preceding claims,
wherein regions of the feature map (40) are classified into one of at least two predefined classes by means of the classifier, wherein the at least two predefined classes include a temporary object class and a non-temporary object class.

10. The method according to at least one of the preceding claims,
wherein occupancy probabilities and/or free space probabilities for individual regions of the feature map (40) are determined based on the detection features.

11. A vehicle (10) equipped with a radar system (14), wherein the radar system includes at least one radar sensor adapted to receive radar signals emitted from at least one radar emitter of the radar system and reflected in a vicinity of the vehicle (10) towards the radar sensor, and a control and processing unit connected to the radar sensor, wherein the control and processing unit is configured to carry out a method according to at least one of the preceding claims.

## Patentansprüche

1. Verfahren zur Bestimmung der Position eines Fahrzeugs (10), das mit einer Steuer- und Verarbeitungseinheit zur Durchführung des Verfahrens und einem Radarsystem (14) ausgestattet ist, wobei das Radarsystem mindestens einen Radarsensor umfasst, der so ausgelegt ist, dass er Radarsignale empfängt, die von mindestens einem Radarsender des Radarsystems ausgesendet und von einem Objekt in der Nähe des Fahrzeugs (10) in Richtung des Radarsensors reflektiert werden,
wobei das Verfahren umfasst:
(i) sukzessives Beschaffen (62) von Radarabtastungen, die jeweils eine Vielzahl von Radarerfassungspunkten (16, 60) umfassen, wobei jeder Radarerfassungspunkt (16, 60) aus einem an dem Radarsensor empfangenen Radarsignal ausgewertet wird und einen Ort in der Nähe des Fahrzeugs (10) darstellt,
(ii) Bestimmen einer vordefinierten Navigationskarte aus einer Datenbank, die mindestens ein Element (24) umfasst, das eine statische Landmarke in der Nähe des Fahrzeugs (10) darstellt,
(iii) Abgleichen (66) mindestens einer Teilmenge der Vielzahl von Radarerfassungspunkten (16, 60) einer Radarabtastung mit dem mindestens einen Element (24) der Navigationskarte, und
(iv) Bestimmen (67) der Position des Fahrzeugs (10) basierend auf dem Abgleichen,
wobei Radarerfassungspunkte (16, 60) von aufeinanderfolgenden Abtastungen über einen Zeitraum gesammelt werden und eine Merkmalskarte (40) der Umgebung des Fahrzeugs (10) erstellt wird (63), wobei die Merkmalskarte (40) eine Vielzahl von Erfassungsmerkmalen der gesammelten Radarerfassungspunkte (16, 60) umfasst,
wobei ein Klassifikator auf die Merkmalskarte (40) angewendet wird, um vorübergehend besetzte Bereiche (56) zu bestimmen, die mit einer vordefinierten Wahrscheinlichkeit von vorübergehend vorhandenen, nicht in der Navigationskarte aufgezeichneten Objekten (30) besetzt sind, und
wobei in Schritt (iii) Radarerfassungspunkte (16, 60), die sich in einem vorübergehend besetzten Bereich (56) befinden, in geringerem Umfang berücksichtigt werden als Radarerfassungspunkte (16, 60), die sich nicht in einem vorübergehend besetzten Bereich (56) befinden,
wobei die Merkmalskarte (40) 4-20 Merkmalsschichten aufweist, die aus den Erfassungsmerkmalen abgeleitet sind,
wobei die ermittelten Erfassungsmerkmale die Anzahl und die Signalamplitude von über den Zeitraum gesammelten Radarerfassungspunkten (16, 60) umfassen und
wobei die ermittelten Erfassungsmerkmale Merkmale umfassen, die aus Höheninformationen und/oder Polarisationsinformationen abgeleitet sind.

2. Verfahren nach Anspruch 1,
wobei die Radarerfassungspunkte (16, 60) aufeinanderfolgender Abtastungen kontinuierlich gesammelt werden und die Merkmalskarte (40) regelmäßig aktualisiert wird.

3. Verfahren nach Anspruch 1 oder 2,
wobei in Schritt (iii) Radarerfassungspunkte (16, 60), die sich in einem vorübergehend besetzten Bereich (56) befinden, von dem Abgleich ausgeschlossen werden.

4. Verfahren nach Anspruch 1 oder 2,
wobei in Schritt (iii) ein gewichteter Abgleich durchgeführt wird und die Gewichtungen von Radarerfassungspunkten (16, 60), die sich in einem vorübergehend besetzten Bereich (56) befinden, in Bezug auf die Gewichtungen von Radarerfassungspunkten (16, 60), die sich nicht in einem vorübergehend besetzten Bereich (56) befinden, reduziert werden.

5. Verfahren nach mindestens einem der vorhergehenden Ansprüche, wobei die Merkmalskarte (40) eine gitterartige Struktur mit einer zweidimensionalen oder mehrdimensionalen Anordnung von Zellen umfasst und die Erfassungsmerkmale den Zellen zugeordnet werden.

6. Verfahren nach mindestens einem der vorhergehenden Ansprüche, wobei der Klassifikator ein gitterbasierter Klassifikator ist.

7. Verfahren nach mindestens einem der vorhergehenden Ansprüche, wobei der Klassifikator ein trainierbarer Klassifikator ist.

8. Verfahren nach Anspruch 7,
wobei der Klassifikator ein Tiefgehendes Neuronales Netzwerk und/oder eine Stützvektormaschine umfasst.

9. Verfahren nach mindestens einem der vorhergehenden Ansprüche, wobei Bereiche der Merkmalskarte (40) mittels des Klassifikators in eine von mindestens zwei vordefinierten Klassen klassifiziert werden, wobei die mindestens zwei vordefinierten Klassen eine Klasse mit temporären Objekten und eine Klasse mit nicht temporären Objekten umfassen.

10. Verfahren nach mindestens einem der vorhergehenden Ansprüche, wobei auf der Grundlage der Erfassungsmerkmale Belegungswahrscheinlichkeiten und/oder Freiraumwahrscheinlichkeiten für einzelne Bereiche der Merkmalskarte (40) bestimmt werden.

11. Fahrzeug (10), das mit einem Radarsystem (14) ausgestattet ist, wobei das Radarsystem mindestens einen Radarsensor, der dafür ausgelegt ist, Radarsignale zu empfangen, die von mindestens einem Radarsender des Radarsystems ausgesendet und in der Nähe des Fahrzeugs (10) in Richtung des Radarsensors reflektiert werden, und eine Steuer- und Verarbeitungseinheit, die mit dem Radarsensor verbunden ist, umfasst, wobei die Steuer- und Verarbeitungseinheit so konfiguriert ist, dass sie ein Verfahren nach mindestens einem der vorhergehenden Ansprüche ausführt.

## Revendications

1. Procédé pour déterminer la position d'un véhicule (10) équipé d'une unité de commande et de traitement destinée à mettre en oeuvre le procédé et d'un système radar (14), dans lequel le système radar inclut au moins un capteur radar adapté pour recevoir des signaux radar émis depuis au moins un émetteur radar du système radar et réfléchis depuis un objet dans un voisinage du véhicule (10) vers le capteur radar,
dans lequel le procédé comprend les étapes consistant à :
(i) acquérir (62) successivement des balayages radar comprenant respectivement une pluralité de points de détection radar (16, 60), dans lequel chaque point de détection radar (16, 60) est évalué à partir d'un signal radar reçu au niveau du capteur radar et représentant un emplacement dans un voisinage du véhicule (10),
(ii) déterminer, à partir d'une base de données, une carte de navigation prédéfinie comprenant au moins un élément (24) représentant un point de repère statique dans le voisinage du véhicule (10),
(iii) faire correspondre (66) au moins un sous-ensemble de la pluralité de points de détection radar (16, 60) d'un balayage radar et ledit au moins un élément (24) de la carte de navigation, et
(iv) déterminer (67) la position du véhicule (10) sur la base de la correspondance,
dans lequel des points de détection radar (16, 60) de balayages successifs sont collectés sur une période temporelle et une carte de caractéristiques (40) du voisinage du véhicule (10) est créée (63), dans lequel la carte de caractéristiques (40) comprend une pluralité de caractéristiques de détection des points de détection radar collectés (16, 60),
dans lequel un moyen de classification est appliqué à la carte de caractéristiques (40) pour déterminer des régions temporairement occupées (56) qui sont, avec une probabilité prédéfinie, occupées par des objets temporairement présents (30) non enregistrés dans la carte de navigation, et
dans lequel, dans l'étape (iii), des points de détection radar (16, 60) qui sont situés dans une région temporairement occupée (56) sont pris en compte dans une moindre mesure que des points de détection radar (16, 60) qui ne sont pas situés dans une région temporairement occupée (56),
dans lequel la carte de caractéristiques (40) a 4 à 20 couches de caractéristiques qui sont dérivées des caractéristiques de détection,
dans lequel les caractéristiques de détection déterminées incluent le nombre et l'amplitude de signal de points de détection radar (16, 60) collectés sur la période temporelle, et
dans lequel les caractéristiques de détection déterminées incluent des caractéristiques dérivées d'informations de hauteur et/ou d'informations de polarisation.

2. Procédé selon la revendication 1,
dans lequel les points de détection radar (16, 60) de balayages successifs sont collectés en continu et la carte de caractéristiques (40) est mise à jour régulièrement.

3. Procédé selon la revendication 1 ou 2,
dans lequel, dans l'étape (iii), des points de détection radar (16, 60) qui sont situés dans une région temporairement occupée (56) sont exclus de la correspondance.

4. Procédé selon la revendication 1 ou 2,
dans lequel, dans l'étape (iii), une correspondance pondérée est effectuée et les poids des points de détection radar (16, 60) qui sont situés dans une région temporairement occupée (56) sont réduits par rapport aux poids des points de détection radar (16, 60) qui ne sont pas situés dans une région temporairement occupée (56).

5. Procédé selon l'une au moins des revendications précédentes,
dans lequel la carte de caractéristiques (40) comprend une structure similaire à une grille comprenant un agencement bidimensionnel ou multidimensionnel de cellules et les caractéristiques de détection sont attribuées aux cellules.

6. Procédé selon l'une au moins des revendications précédentes,
dans lequel le moyen de classification est un moyen de classification basé sur la grille.

7. Procédé selon l'une au moins des revendications précédentes,
dans lequel le moyen de classification est un moyen de classification entraînable.

8. Procédé selon la revendication 7,
dans lequel le moyen de classification comprend un réseau de neurones profonds et/ou une machine à vecteurs de support.

9. Procédé selon l'une au moins des revendications précédentes,
dans lequel des régions de la carte de caractéristiques (40) sont classifiés en une d'au moins deux classes prédéfinies à l'aide du moyen de classification, dans lequel lesdites au moins deux classes prédéfinies incluent une classe d'objets temporaires et une classe d'objets non temporaires.

10. Procédé selon l'une au moins des revendications précédentes,
dans lequel des probabilités d'occupation et/ou des probabilités d'espace libre pour des régions individuelles de la carte de caractéristiques (40) sont déterminées sur la base des caractéristiques de détection.

11. Véhicule (10) équipé d'un système radar (14), dans lequel le système radar inclut au moins un capteur radar adapté pour recevoir des signaux radar émis depuis au moins un émetteur radar du système radar et réfléchis dans un voisinage du véhicule (10) vers le capteur radar, et une unité de commande et de traitement connectée au capteur radar, dans lequel l'unité de commande et de traitement est configurée pour mettre en oeuvre un procédé selon l'une au moins des revendications précédentes.
